Europäisches Patentamt

**European Patent Office**

Office européen des brevets

(19)

(11) Numéro de publication: **0 182 676**
**B1**

(12) **FASCICULE DE BREVET EUROPEEN**

(45) Date de publication du fascicule du brevet:
**14.09.88**

(51) Int. Cl.⁴: **F 16 K 1/226**

(21) Numéro de dépôt: **85401694.6**

(22) Date de dépôt: **29.08.85**

(54) Robinet à papillon à caractère universel et procédé de fabrication dudit robinet.

(30) Priorité: **27.09.84 FR 8414829**

(43) Date de publication de la demande:
**28.05.86 Bulletin 86/22**

(45) Mention de la délivrance du brevet:
**14.09.88 Bulletin 88/37**

(84) Etats contractants désignés:
**BE DE GB IT NL SE**

(56) Documents cités:
**FR - A - 2 151 470**
**FR - A - 2 341 797**
**FR - A - 2 379 739**
**US - A - 2 994 342**
**US - A - 3 692 276**

(73) Titulaire: **APPLICATIONS MECANIQUES ET ROBINETTERIE INDUSTRIELLE A.M.R.I. Société anonyme dite:, Les Mercuriales 40, rue Jean Jaurès, F-93176 Bagnolet Cédex (FR)**

(72) Inventeur: **Garrigues, Jean-Claude, Buziet, F-64680 Ogeu Les Bains (FR)**
Inventeur: **Guiroy, Patrick, 3, Lotissement du Tambous, F-64680 Ogeu Les Bains (FR)**

(74) Mandataire: **Marquer, Francis et al, CABINET MOUTARD 35, avenue Victor Hugo Résidence Champfleury, F-78180 Voisins-le-Bretonneux (FR)**

## Description

La présente invention concerne un robinet à papillon à caractère universel, c'est-à-dire un robinet à papillon pouvant être monté entre tous les types de brides réalisées selon les normes actuellement en vigueur au niveau international, à savoir notamment les normes AFNOR, DIN, ISO, ANSI, AWWA, MSS, BS, JIS.

D'une manière générale, on sait qu'un robinet à papillon se compose:
– d'un corps réalisé en une ou plusieurs parties et comprenant un alésage central, deux flancs radiaux parallèles au centre desquels débouche ledit alésage et un perçage transversal perpendiculaire à l'axe dudit alésage,
– d'un papillon monté rotatif à l'intérieur dudit corps au moyen d'au moins un arbre d'entraînement passant au travers dudit perçage et
– d'une garniture d'étanchéité coopérant avec ledit corps et ledit papillon pour réaliser l'étanchéité amont/aval en position fermée du robinet.

L'invention concerne plus particulièrement un robinet à papillon dans lequel la garniture d'étanchéité consiste en une bague souple ou manchette en élastomère de section sensiblement en forme du U dont l'âme vient recouvrir l'alésage du corps et dont les joues latérales viennent en retour sur les flancs radiaux du corps et servent à assurer une étanchéité vers l'extérieur au niveau du raccordement du robinet à la tuyauterie.

Il convient de noter à ce sujet que le raccordement d'un tel robinet à la tuyauterie s'effectue habituellement au moyen de deux brides de raccordement présentant chacune une face radiale destinée à être montée serrée contre une face radiale correspondante du corps du robinet. A cet effet, ces brides comprennent chacune une série de perçages axiaux uniformément répartis, au travers desquels sont montés des tirants ou des vis. Ces tirants ou ces vis sont chacun engagés au travers d'un couple de perçages coaxiaux respectifs des deux brides et sont boulonnés à chacune de leurs extrémités de manière à assurer à la fois:
– une étanchéité vers l'extérieur par compression de la partie de la bague souple venant en retour sur les faces radiales du robinet, et
– une liaison mécanique entre les deux tronçons de la tuyauterie et le robinet.

En outre, dans de nombreux types de robinets, les joues de la manchette viennent partiellement s'engager dans un évidement circulaire prévu dans les flancs correspondants du corps. Dans certains robinets, et en particulier celui faisant l'objet du brevet FRA 2 151 470, ces évidements comprennent, en partant de l'alésage du corps, une surface radiale axialement décalée par rapport audit flanc, puis une gorge annulaire. Dans ce cas, les joues de la manchette présentent, au niveau de la surface radiale de l'évidement, une épaisseur légèrement supérieure à la profondeur de l'évidement et, à leurs extrémités, un tenon s'engageant dans ladite gorge annulaire.

Cette disposition permet à la fois d'assurer un bon ancrage de la manchette sur le corps et de limiter la compression des joues en fonction du niveau d'étanchéité recherché, étant entendu que cette étanchéité est obtenue lorsque, à la suite du serrage réalisé par le boulonnage des tirants, la face radiale des brides vient buter contre les flancs radiaux du corps du robinet.

Selon ce type de montage, le centrage du corps du robinet par rapport aux brides est réalisé par les tirants ou les vis. A cet effet, le corps de la vanne peut comprendre, à sa périphérie, une nervure centrale (ou éventuellement deux nervures latérales), dans laquelle sont réalisés des perçages axiaux ou des encoches au travers desquelles passent les tirants ou les vis.

Or, il s'avère que pour un même type de robinet, le diamètre intérieur des brides, la position angulaire des trous de passage des tirants ou des vis prévus sur ces brides, leur distance à l'axe de la bride et leur propre diamètre sont variables selon les différentes normes actuellement en vigueur.

Ces différences de formes des brides nécessitent de prévoir des gammes de robinets spécifiquement adaptées pour chaque type de brides, notamment en ce qui concerne la position et les dimensions des perçages ou des encoches au travers desquelles doivent passer les tirants ou les vis.

En outre, on constate que dans les robinets à papillon du type de celui précédemment décrit, la compression des joues de la manchette par les faces radiales de la bride provoque un déplacement de l'élastomère qui entraîne une variation correspondante de l'épaisseur de l'âme de la manchette sur laquelle vient porter le papillon. Le niveau de l'étanchéité amont/aval du robinet, ainsi que le couple de manœuvre se trouvent donc influencés par ce phénomène de fluage.

Il s'ensuit que l'emploi de brides de normes différentes et donc de diamètres intérieurs différents, entraîne, en raison de la différence de volume de l'élastomère refoulé, une variation des caractéristiques d'étanchéité et de couple de manœuvre du robinet.

L'invention a donc tout d'abord plus particulièrement pour but de supprimer tous ces inconvénients. Elle propose un robinet à papillon du type de celui précédemment décrit, mais donc le corps présente à sa périphérie une conformation propre à permettre son montage avec centrage entre différents types de brides de diamètre intérieur variable et peut comprendre des trous de passage de tirants de diamètres différents et disposés dans des emplacements différents, conformément aux susdites normes. En outre, les évidements circulaires prévus dans les faces radiales du corps de ce robinet, ainsi que les joues de la manchette pénétrant dans ces évidements, sont spécialement conformés de manière à supprimer l'influence du diamètre intérieur de la bride sur les propriétés d'étanchéité et de couple du robinet.

En vue de parvenir à ce résultat, l'invention propose un robinet à papillon comprenant, d'une façon analogue à celle du robinet décrit dans le brevet FRA 2 151 470 précité:
– un corps présentant un alésage central, un perçage transversal perpendiculaire à l'axe dudit alésage, deux flancs radiaux parallèles au centre desquels débouche ledit alésage et comprenant chacun un évidement circulaire coaxial s'étendant radialement à partir dudit alésage, et comportant une gorge annulaire, de fond rectangulaire, s'étendant axialement dans le corps et dont une paroi latérale se termine au niveau dudit flanc radial,
– un obturateur monté rotatif à l'intérieur dudit corps au moyen d'au moins un arbre d'entraînement passant au travers dudit perçage, et
– une manchette en élastomère de section sensiblement en forme de U dont l'âme vient recouvrir l'alésage du corps et dont les joues latérales viennent partiellement s'engager dans lesdits évidements circulaires et présentent une forme intérieure sensiblement complémentaire à celle des évidements circulaires respectifs, avec cependant un diamètre extérieur inférieur à celui de ladite paroi latérale de la gorge annulaire, de sorte qu'entre ladite joue et ladite paroi latérale est prévu un volume annulaire v libre au repos, et une forme extérieure comprenant au moins, une face plane sensiblement située dans le plan du flanc radial correspondant et, au droit de la susdite gorge, une forme en saillie vers l'extérieur par rapport au plan dudit flanc radial,

ce robinet utilisant pour son montage à une tuyauterie, au moins une bride comportant un collet présentant une face radiale destinée à venir s'appliquer contre l'un desdits flancs radiaux et comprenant, à sa périphérie, une série de perçages axiaux au travers desquels peuvent être montés des tirants.

Selon l'invention, ce robinet est plus particulièrement caractérisé en ce que:
– la gorge annulaire est séparée de l'alésage central par une partie rentrante de forme sensiblement conique et par une partie évasée,
– la susdite face plane de la forme extérieure des joues s'étend au droit de la susdite partie évasée,
– la susdite forme en saillie consiste en une forme bombée tangente à un plan radial axialement décalé vers l'extérieur par rapport audit plan et s'étand en outre au droit de la susdite partie conique.

Ainsi, lors du serrage des tirants, les formes bombées des joues de la manchette vont se trouver comprimées par les faces radiales des brides jusqu'à ce que celles-ci viennent en butée sur les flancs du robinet. Ces formes bombées sont alors aplaties contre les faces radiales des brides, par conséquent dans le plan des flancs radiaux du robinet. Au cours de cette action, la compression de la forme bombée va provoquer un déplacement de l'élastomère des joues qui se trouve canalisé par la partie rentrante de l'évidement en direction de la gorge annulaire et vient combler le susdit volume libre, tandis que l'étranglement formé au niveau de l'extrémité de la partie évasée interdit tout déplacement d'élastomère en direction de l'âme de la manchette.

Des développements d'un robinet selon l'invention sont caractérisés par les revendications 2 à 5.

Il convient de noter que le diamètre au niveau de la jonction entre la partie rentrante et la partie évasée des évidements circulaires est prévu supérieur au diamètre intérieur maximum des différents types de brides, de manière à s'assurer de la bonne compression des faces bombées des joues.

Par ailleurs, le diamètre de la susdite paroi latérale de la gorge circulaire est prévu inférieur au diamètre extérieur minimum des parties des faces radiales des brides venant comprimer lesdites joues, de manière à faire en sorte que ces parties viennent toujours en butée sur le flanc radial du corps du robinet.

En ce qui concerne le problème posé par le centrage du robinet entre brides et le démontage de la tuyauterie aval sous pression de service, l'invention part de la constatation qu'il existe une certaine correspondance dans la position des trous de passage des tirants ou des vis prévus sur les différents types de brides conformes aux susdites normes, de sorte qu'il est possible de les classer par ensembles de trous de passage correspondants. Par ailleurs, il s'avère que les projections, dans un plan radial, des perçages de chacun de ces ensembles de trous de passage, sont groupées dans des zones bien localisées distinctes des zones des autres ensembles.

L'invention selon les revendications 6 et 7 propose donc un robinet du type de celui précédemment décrit, dont le corps présente une conformation telle qu'elle permette son montage entre tous les types de brides précédemment mentionnés et le démontage de la tuyauterie aval sous pression de service maximum dans tous les raccordements et ce, avec un encombrement et un poids réduits au minimum.

Selon l'invention, le robinet à papillon comprend un corps présentant, à sa périphérie, au moins deux bossages s'étendant dans le volume de passage d'un ensemble de tirants ou de vis correspondants de différents types de brides, la section de ces bossages dans un plan radial du robinet présentant une forme telle qu'elle contienne exclusivement la zone de passage dudit ensemble de tirants ou de vis, de telle manière que l'on puisse pratiquer dans ces bossages un perçage dans le volume de passage d'un tirant ou d'une vis de cet ensemble, correspondant à une bride d'un type déterminé, le nombre desdits bossages étant déterminé en fonction du diamètre nominal du robinet et de la pression maximale admissible.

La procédé de fabrication d'un robinet selon l'invention est caractérisé par la revendication 8.

Un mode de réalisation de l'invention sera décrit ci-après, à titre d'exemple non limitatif, avec référence aux dessins annexés dans lesquels:

La figure 1 représente un robinet à papillon selon l'invention, partiellement en coupe axiale (côté droit de la figure) et en vue de face (côté gauche de la figure);

la figure 2 est une vue de face complète du robinet représenté figure 1;

la figure 3 est une coupe selon A/A du robinet représenté sur la figure 1;

la figure 4 est une coupe axiale à plus grande échelle d'un détail de la figure 1 permettant d'illustrer le principe de l'étanchéité au niveau des brides du robinet à papillon;

les figures 5 à 8 sont des vues de face de différents robinets dont le corps est conformé de manière à présenter un nombre de bossages juste nécessaire en fonction du diamètre nominal du robinet et de la pression maximale admissible;

la figure 9 est une coupe axiale schématique permettant d'illustrer un exemple de montage entre brides d'un robinet sur une tuyauterie, et le mode de démontage en service de la tuyauterie aval.

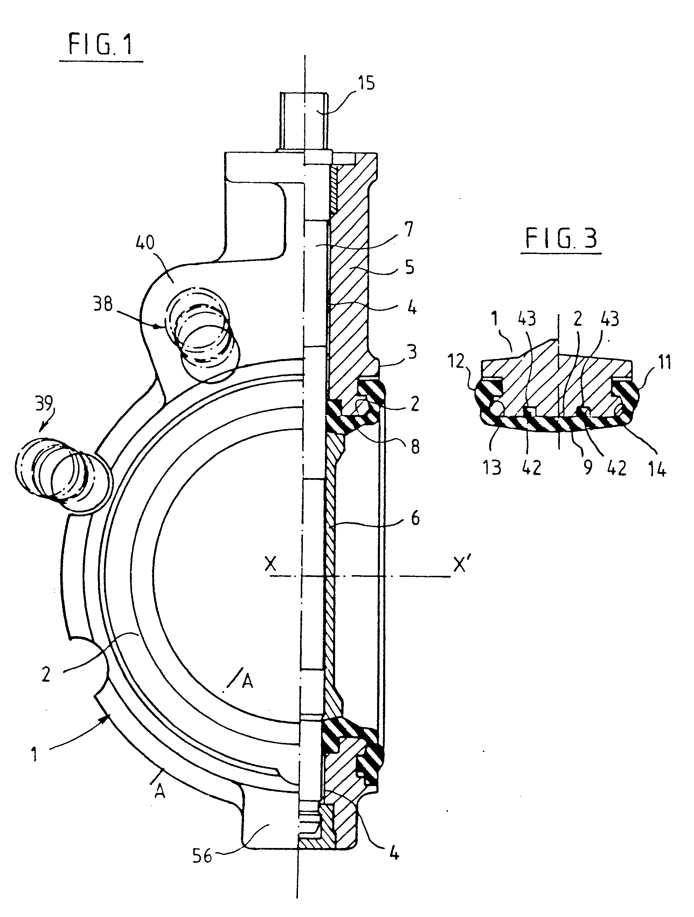

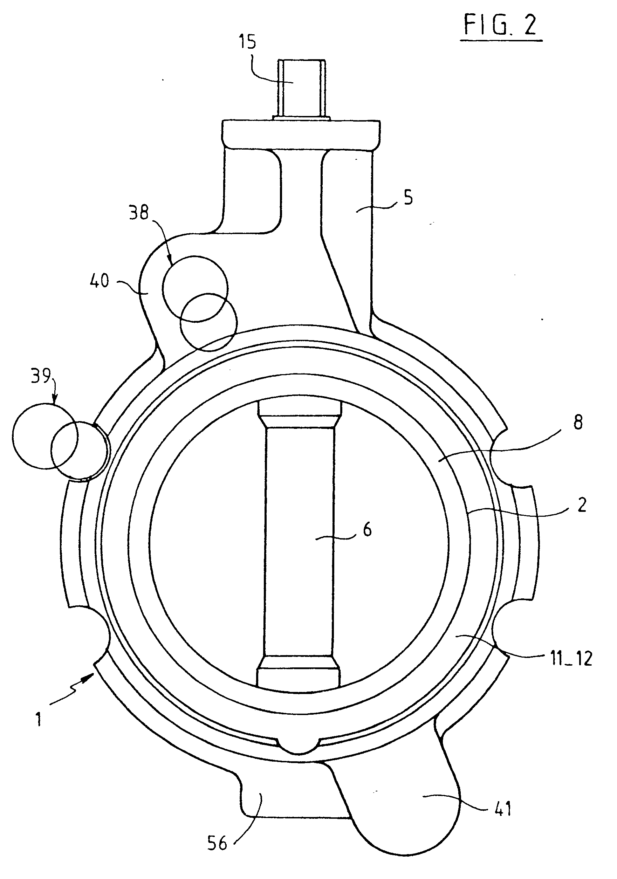

Tel que représenté sur les figures 1 et 2, le robinet à papillon se compose d'une façon classique:

— d'un corps 1 comprenant un alésage central cylindrique 2, deux flancs radiaux parallèles 3 au centre desquels débouche ledit alésage 2 et d'un perçage transversal 4 perpendiculaire à l'axe XX' dudit alésage 2 et se prolongeant, d'un côté, à l'intérieur d'un col radial 5 venu de matière avec ledit corps 1,

— d'un obturateur 6, monté rotatif à l'intérieur de l'alésage 2 au moyen d'au moins un arbre d'entraînement 7, passant au travers dudit perçage 4, et

— d'une garniture d'étanchéité consistant en une bague souple ou manchette 8 en élastomère de section sensiblement en forme de U, dont l'âme 9 vient recouvrir l'alésage 2 du corps 1 (figure 3) et dont les joues latérales 11, 12 viennent en retour dans des évidements circulaires 13, 14 respectivement ménagés dans les flancs radiaux 3 du corps 1.

Le principe général du fonctionnement d'un tel robinet est bien connu et ne sera pas explicité en détail. On notera simplement que le manœuvre de ce robinet s'obtient par une rotation quart de tour de l'obturateur 6 sous l'effet d'une action exercée sur l'extrémité 15 de l'arbre d'entraînement 7 dépassant au-delà du col 5.

De même, le principe général du raccordement entre brides d'un tel robinet est bien connu et ne sera pas lui non plus précisé en détail.

Il convient de noter simplement à ce sujet que ces brides comprennent au moins une face radiale destinée à venir s'appliquer contre les flancs radiaux 3 du robinet et de perçages axiaux périphériques destinés à permettre d'assurer une liaison mécanique entre brides au moyen de tirants boulonnés ou de vis. Le montage du robinet sur une tuyauterie s'obtient alors en disposant le robinet entre les deux brides montées sur les deux extrémités en vis-à-vis de la tuyauterie, en engageant les tirants ou les vis dans les couples de perçages coaxiaux respectifs de ces deux brides, puis en vissant les écrous ou les vis de manière à ce que les faces radiales de ces deux brides viennent s'appliquer contre les flancs radiaux respectifs 3 du robinet en comprimant les joues 11, 12 de la manchette 8 qui, de ce fait, assurent l'étanchéité au niveau des deux raccordements.

On notera à ce sujet que la face radiale des brides peut être plane ou même présenter un étagement formant une face surélevée destinée à venir en contact avec le flanc du robinet.

Comme précédemment mentionné, l'invention propose tout d'abord un ensemble de dispositions relatives à la conformation des évidements circulaires 13, 14 prévus sur les flancs radiaux 3 du robinet, et des joues 11, 12 de la manchette 8 permettant l'utilisation de brides de différents types sur un même robinet et ce, sans que les caractéristiques d'étanchéité et de couple de ce robinet ne se trouvent affectées.

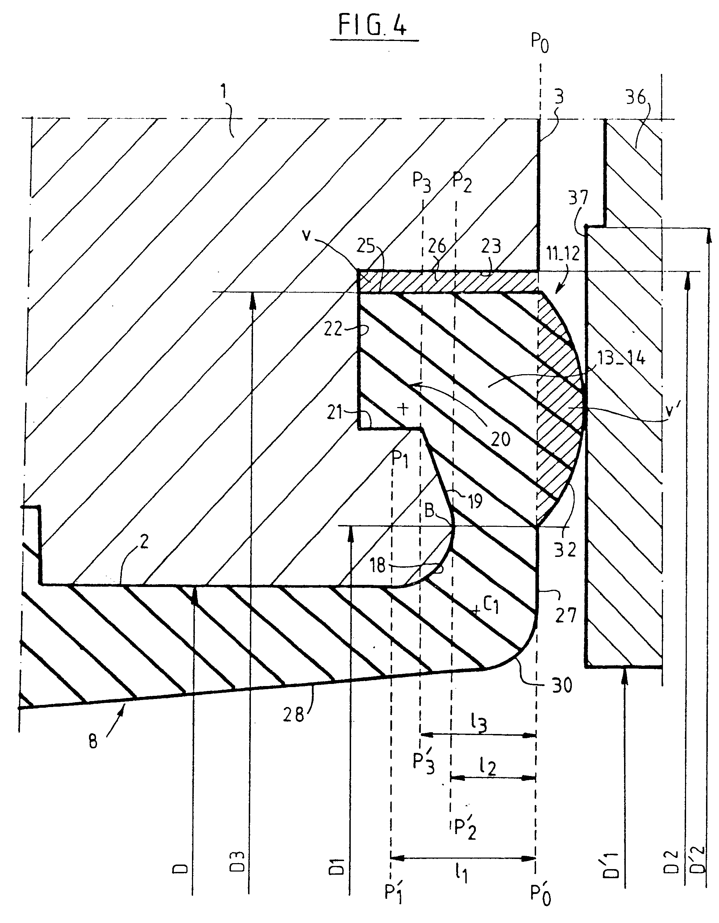

Cet ensemble de dispositions qui se trouve plus particulièrement illustré sur la figure 4 fait intervenir, pour chacun des flancs radiaux 3 du robinet, un évidement 13, 14 comprenant succesivement:

— une première partie 18 de profil incurvé prolongeant l'alésage 2 du corps 1 à partir d'un premier plan radial $P_1$, $P'_1$ passant à l'intérieur du corps à une distance $1_1$ du flanc 3 du robinet (plan $P_0$, $P'_0$), et se terminant (point B) dans un second plan radial $P_2$, $P'_2$ situé à une distance $1_2$ inférieure à la distance $1_1$, cette première partie 18 présentant, au niveau de son extrémité, un diamètre $D_1$ supérieur au diamètre D de l'alésage 2 du corps 1,

— une seconde partie 19, sensiblement conique, venant en retour vers l'intérieur du corps 1 et se terminant dans un troisième plan radial $P_3$, $P'_3$ situé à une distance $1_3$ du flanc radial 3 (plan $P_0$, $P'_0$) supérieure à la distance $1_2$, et

— une troisième partie formant une gorge annulaire 20 s'étendant axialement vers l'intérieur du corps, cette gorge 20 présentant successivement: une première paroi latérale 21 cylindrique prolongeant la seconde partie 19, un fond 22 axialement en retrait vers l'intérieur du corps 1 et une deuxième paroi latérale 23 cylindrique présentant un diamètre $D_2$ supérieur au diamètre $D_1$.

Cet ensemble de dispositions fait également intervenir une manchette 8 dont les joues 11, 12 présentent chacune une forme intérieure sensiblement complémentaire de celle de l'évidement 13, 14 dans lequel elle vient partiellement se loger, et un diamètre extérieur $D_3$ sensiblement inférieur au diamètre $D_2$ de la paroi latérale 23 de la gorge 20, de manière à laisser subsister au repos, entre ladite paroi latérale 23 de la gorge 20 et la bordure extérieure 25 de la joue 11, 12, un volume annulaire libre 26 de volume v.

Par ailleurs, ces joues 11, 12 comprennent chacune une forme extérieure comprenant, en partant de la surface intérieure de la manchette:

— une face radiale 27 située dans le plan $P_0$, $P'_0$ du flanc radial 3 et s'étendant depuis la surface intérieure 28 de l'âme 9 de la manchette 8 jusqu'au niveau du diamètre $D_1$, le raccordement de cette face radiale 27 à la surface intérieure 28 de la manchette 8 s'effectuant par une portion de profil incurvé 30 de centre de courbure $C_1$;

— une forme bombée 32 située au droit de la seconde partie 19 et de la gorge 20 de l'évidement 13, 14 et se terminant au niveau de la bordure extérieure 25 de la joue 11, 12.

D'une façon plus précise, cette forme bombée 32 s'étend axialement vers l'extérieur au-delà du

plan $P_0$, $P'_0$ du flanc radial 3 et présente, à partir dudit plan $P_0$, $P'_0$ un volume $v'$ sensiblement égal au volume libre $v$. De ce fait, lors du serrage des brides sur le corps du robinet, les faces radiales 37 aplatissent les formes bombées 32 dans les plans $P_0$, $P'_0$ correspondants et provoquent un transfert de l'élastomère des joues qui vient combler le volume libre $v$. La conformation des évidements 13, 14 et des joues 11, 12 de la manchette 8 a donc été plus particulièrement prévue pour canaliser le déplacement de l'élastomère du volume $v'$ au volume $v$ en évitant tout transfert de matière vers l'intérieur du robinet, (et en particulier vers l'âme 9 de la manchette 8), susceptible de perturber le niveau d'étanchéité et le couple du robinet.

A cet effet, la pente de la deuxième partie 19 (sensiblement conique) de l'évidement 13, 14 par rapport à l'axe de l'alésage peut avantageusement être comprise entre 10° et 40°.

Le diamètre $D_1$ de la base ce cette deuxième partie 19, au droit de laquelle prend naissance la forme bombée 32 de la joue 11, 12, est de préférence prévu au moins égal au plus grand diamètre intérieur $D'_1$ des brides utilisables pour ce robinet.

Par ailleurs, la partie des joues 11, 12 de la manchette 8 qui rentre dans les gorges annulaires 20 constitue un tenon destiné à ancrer la manchette 8 dans le corps 1 du robinet afin de s'opposer à toute dépression interne dans le robinet due par exemple à un fonctionnement à une pression inférieure à la pression atmosphérique et/ou à une dépression due à l'écoulement de fluide véhiculé à l'intérieur du robinet.

La forme arrondie 18 prévue au niveau du raccordement de l'évidement 13, 14 à l'alésage 2 permet, quant à elle, de s'opposer à toute déchirure due aux contraintes dans la manchette 8 (traction, compression).

Dans l'exemple représenté sur la figure 4, la bride 36, dont on n'a représenté que la partie coopérant avec le flanc radial 3 correspondant du robinet, présente une face radiale surélevée 37.

Il est clair que lorsque la bride est serrée, cette face surélevée 37 doit venir porter sur le flanc radial 3 du robinet en déterminant ainsi un taux de compression prédéterminé de la joue 11, 12 de la manchette 8. Ainsi, pour tenir compte des variations de diamètre extérieur de cette face surélevée 37, le diamètre $D_2$ de la face latérale de la gorge est choisi inférieur au diamètre extérieur maximum $D'_2$ des surfaces surélevées 37 des brides utilisables avec ce robinet.

Bien entendu, hormis la conformation des joues 11, 12, l'invention ne se limite pas à une forme particulière de manchette. Ainsi, par exemple, l'âme de la manchette peut en outre comprendre, comme représenté figure 3, des nervurations circulaires 42 venant s'engager dans des gorges radiales 43 prévues dans l'alésage 2 du corps 1.

Outre les dispositions précédemment décrites, il a été nécessaire de définir la forme extérieure du corps du robinet afin de permettre, tout en optimisant le poids dudit corps, son montage entre toutes les brides habituellement rencontrées au niveau international et le démontage de la tuyauterie aval sous pression maximum de service dans tous les raccordements (AFNOR, DIN, ISO, ANSI, JIS BS).

On sait que le nombre de points de fixation brides/robinet à prévoir est directement fonction des efforts supportés par robinet lors d'une opération de démontage de la tuyauterie aval, ces efforts étant dus:
– à la pression du fluide s'exerçant sur l'obturateur en position fermée,
– à la compression de la joue de la manchette contre la bride amont,
– au poids propre du robinet et de son actionneur.

La somme de ces efforts à la pression maximale de service donne l'effort maximum permettant de déterminer le nombre et le dimensionnement de ces points de fixation.

Ainsi, à chaque diamètre de robinet sont déterminés un effort maximum et un nombre de tirants ou de vis juste nécessaire pour maintenir le robinet sur sa bride amont en toute sécurité.

Or il s'avère que, dans un plan radial du robinet, les aires de passage des tirants ou des vis utilisés pour les différents types de brides utilisables sur ce robinet se trouvent regroupées dans des zones bien localisées, distinctes les unes des autres.

L'invention se propose donc de tirer partie de cette particularité en vue de réaliser les points de fixation brides/corps.

Elle prévoit à cet effet à la périphérie du corps du robinet et venus de matière avec celui-ci, des bossages destinés à recevoir les trous de passage des tirants ou des vis et présentant les propriétés suivantes:
– le nombre des bossages correspond au nombre des tirants ou vis juste nécessaire compte tenu de l'effort maximum précédemment mentionné,
– la position de ces bossages correspond à la position des points de fixation préalablement déterminée,
– chacun de ces bossages présente des dimensions telles qu'il inclut, dans un plan radial du robinet, une zone de regroupement correspondante des aires de passage des tirants ou des vis utilisés pour les différents types de brides.

A titre d'exemple, sur les figures 1 et 2 on a simplement indiqué deux zones de regroupement 38, 39, étant entendu que les autres zones de regroupement se trouvent uniformément réparties à la périphérie du corps 1 du robinet.

Sur ces deux figures, il n'a été représenté que deux bossages, à savoir: un bossage 40 attenant au col 5 du corps 1 du robinet, et un bossage 41 diamétralement opposé.

Ainsi, pour effectuer un montage du robinet entre deux brides d'un type déterminé, il suffira de procéder au perçage, dans les deux bossages, d'un trou lisse ou taraudé de passage des tirants ou de vis, aux emplacements et aux dimensions correspondant à ce type de brides.

D'une façon plus générale, la réalisation des corps de robinet conformes à l'invention comprend les étapes suivantes:
– pour chacune des gammes de robinets, qui se trouve définie par le diamètre nominal de ce robinet, la détermination des zones de groupement des projections dans un plan radial des perçages des différentes brides utilisables pour ce robinet, surperposées coaxialement,

- la détermination, par calcul de résistance en conformité avec les modes de calcul habituels, du nombre nécessaire et suffisant de bossages permet de réaliser le démontage aval de la tuyauterie sous la pression maximum de service.

- en fonction de ce nombre et des zones de groupement, la détermination de la forme et de l'emplacement des bossages à prévoir à la périphérie du corps,

- la réalisation, par exemple par moulage, du corps 1 du robinet muni des bossages précédemment déterminés, et

- le perçage, dans ces bossages, de trous de passage des tirants ou des vis à des emplacements et à des dimensions déterminés en fonction des brides que l'on désire utiliser.

Il est clair que grâce à ce procédé, il suffit de prévoir une seule forme de corps 1 de robinet pour chacune des gammes (diamètre nominal) de robinets, ces corps 1 de robinet étant ensuite utilisables avec tous les types de brides précédemment mentionnés correspondant à cette gamme.

En ce qui concerne la détermination du nombre de perçages à prévoir sur le corps 1 du robinet et, en conséquence, le nombre de bossages, cette détermination peut être avantageusement effectuée à l'aide du Tableau suivant qui fournit le nombre de bossages juste nécessaire à la tenue mécanique et à l'étanchéité vers l'extérieur côté amont lors d'un démontage de la tuyauterie aval à la pression maximum de service en fonction du diamètre nominal DN (en mm) du robinet.

Tableau

| DN | 32 à 125 | 150 à 250 | 300 à 450 | 500 à 600 |
|---|---|---|---|---|
| Nombre de bossages juste nécessaire | 2 | 4 | 6 | 8 |

Les nombres indiqués dans ce tableau sont donnés à titre d'exemple pour une pression maximale admissible de 20 bars et pour les dimensions normalisées des vis imposées par les normes de raccordement correspondantes.

Il convient de noter que la répartition des bossages de fixation doit être judicieusement effectuée afin de supporter les efforts importants induits par la pression dans la conduite amont et transmis au corps 1 par l'intermédiaire de l'arbre de manœuvre 7.

Ainsi, le nombre de bossages est toujours pair et équitablement réparti de part et d'autre de l'axe de manœuvre, les bossages principaux étant toujours adjoints à l'axe de manœuvre, c'est-à-dire reliés au col 5 et au fond 56.

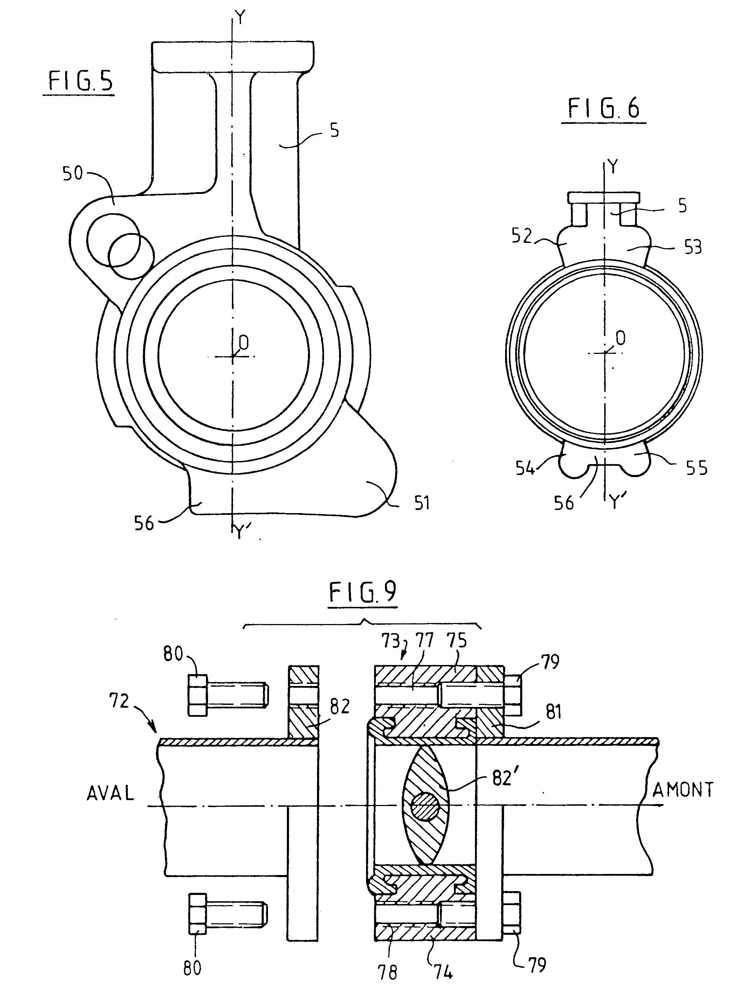

Les figures 5 à 8 fournissent des exemples de forme de corps de robinet pour les diamètres nominaux précédemment indiqués.

Ainsi, la figure 5 représente un corps de robinet dont le diamètre nominal est compris dans la gamme 32 à 125 mm. Ce corps présente deux bossages 50–51 diamétralement opposés et orientés sensiblement à 45° de l'axe YY' de l'arbre d'entraînement du papillon. L'un de ces bossages 50 est prolongé jusqu'au col 5 du robinet tandis que l'autre se prolonge, d'une façon symétrique par rapport au centre 0 du robinet, jusqu'au fond 56.

Dans l'exemple répresenté sur la figure 6 qui correspond à la gamme 150 à 250 mm, le robinet comprend quatre bossages dont deux 52, 53 sont attenants au col 5 et les deux autres 54, 55 qui se trouvent diamétralement opposés aux bossages 52, 53 sont disposés de part et d'autre de l'axe YY'. Ces deux bossages 52, 53 se trouvent liés au fond de robinet 56.

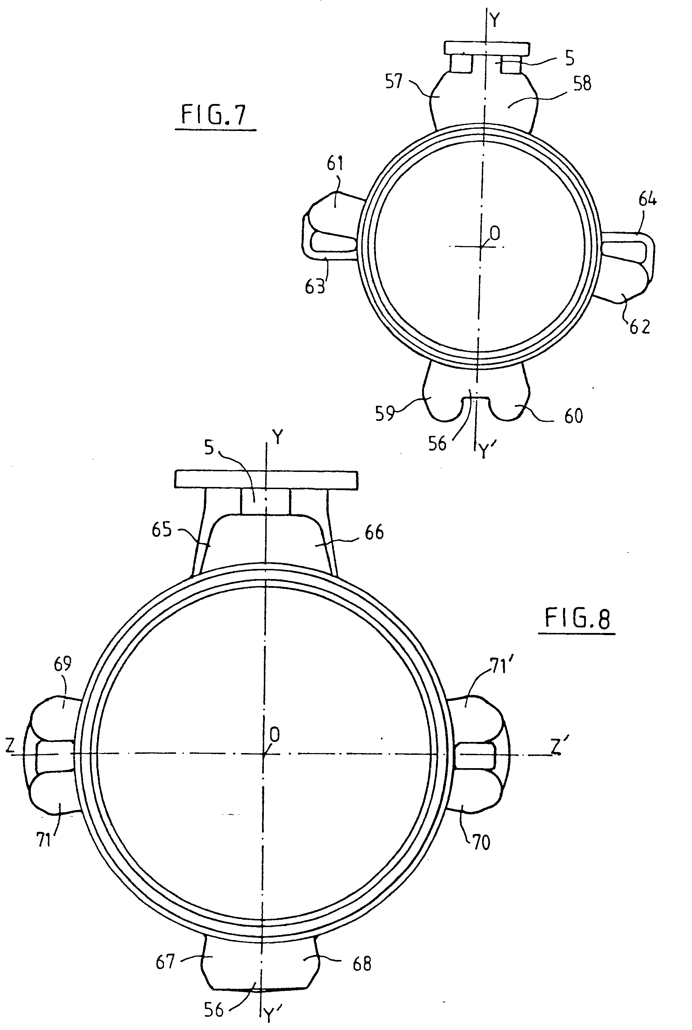

Le robinet représenté figure 7 qui correspond à la gamme 300 à 450 mm comprend six bossages, à savoir, quatre bossages 57 à 60 disposés d'une façon analogue à ceux 52 à 55 représentés figure 6 et deux bossages 61, 62 diamétralement opposés au voisinage d'un axe ZZ' perpendiculaire de l'axe YY'. Ces deux bossages sont prolongés par une partie 63, 64 formant une anse de manutention.

Dans la gamme de 500 à 600 mm, le robinet peut comprendre, comme représenté figure 8, huit bossages, à savoir: six bossages 65 à 70 tels que ceux 57 à 62 représentés figure 7 et deux bossages 71, 71' diamétralement opposés, disposés symétriquement aux bossages 69, 70 par rapport à un axe ZZ' perpendiculaire à l'axe YY' et passant par le centre 0.

Il convient de noter que les bossages utilisables conformément à l'invention peuvent être simples et former une nervuration médiane. Ils peuvent aussi être doubles et présenter une forme en U dont les deux ailes s'étendent selon deux plans radiaux latéraux du robinet.

Bien entendu, la technique de démontage sous pression de service de la tuyauterie aval est différente selon la nature des bossages utilisés et selon que les perçages pratiqués dans ces bossages sont lisses ou filetés.

Ainsi, la figure 9 illustre un mode de démontage de la tuyauterie aval 72 d'un robinet 73 dont le corps comprend au moins deux bossages 74, 75 présentant chacun un perçage taraudé 77, 78.

Selon cet exemple, dans chacun de ces perçages 77, 78 viennent se visser deux vis 79, 80 servant respectivement au montage des brides amont et aval 81, 82.

Le démontage de la tuyauterie aval sous pression de service s'obtient alors en dévissant simplement les vis 80 de la bride aval, l'obturateur 82' étant en position formée et le corps du robinet 73 restant appliqué contre la bride amont 81.

Dans le cas où les bossages sont doubles et comportent des perçages lisses, la fixation des brides sur le corps s'obtient au moyen de tirants passant chacun successivement au travers d'un perçage de la bride amont d'un perçage correspondant pratiqué dans les deux ailes du bossage et dans un perçage de la bride aval. Le serrage est ensuite obtenu au moyen de deux écrous venant se visser sur les extrémités du tirant dépassant hors des brides amont et aval.

Dans ce cas, le démontage sous pression de service de la tuyauterie aval peut comprendre successivement pour chaque tirant:
– le démontage de l'écrou aval,
– un déplacement de l'écrou vers l'amont, et
– le remontage de l'écrou aval dans l'intervalle des deux ailes du bossage.

Bien entendu, d'autres dispositions peuvent être éventuellement envisagées, notamment quand le démontage aval risque d'être fréquent, ces solutions pouvant par exemple utiliser des brides spéciales comprenant des perçages taraudés au passage des tirants et des perçages lisses au passage des vis.

## Revendications

1. Robinet à papillon du type comprenant:
– un corps (1) présentant un alésage central (2), un perçage transversal (4) perpendiculaire à l'axe dudit alésage (2), deux flancs radiaux parallèles (3) au centre desquels débouche ledit alésage (2) et comprenant chacun un évidement circulaire (13, 14) coaxial s'étendant radialement à partir dudit alésage (2), une gorge annulaire (20) de fond rectangulaire s'étendant axialement dans le corps (1) et dont une paroi latérale (23) se termine au niveau dudit flanc radial (3),
– un obturateur (6) monté rotatif à l'intérieur dudit corps au moyen d'au moins un arbre d'entraînement (7) passant au travers dudit perçage (4), et
– une manchette en élastomère (8) de section sensiblement en forme des U dont l'âme (9) vient recouvrir l'alésage (2) du corps (1) et dont les joues latérales (11, 12) viennent partiellement s'engager dans lesdits évidements circulaires (13, 14), et présentent une forme intérieure sensiblement complémentaire à celle des évidements circulaires respectifs (13, 14), avec cependant un diamètre extérieur inférieur à celui de ladite paroi latérale (23) de la gorge annulaire (20), de sorte qu'entre ladite joue (11, 12) et ladite paroi latérale (23) est prévu un volume annulaire v (26) libre au repos, et une forme extérieure comprenant au moins, une face plane (27) sensiblement située dans le plan du flanc radial (3) correspondant et, au droit de la susdite gorge (20), une forme en saillie vers l'extérieur par rapport au plan ($P_0$, $P'_0$) dudit flanc radial (3),
ce robinet utilisant pour son montage à une tuyauterie, au moins une bride comportant un collet présentant une face radiale destinée à venir s'appliquer contre l'un desdits flancs radiaux (3) et comprenant, à sa pèriphèrie, une série de perçages axiaux au travers desquels peuvent être montés tirants,
caractérisé en ce que:
– la gorge annulaire (20) est séparée de l'alésage central (2) par une partie rentrante de forme sensiblement conique (19) et par une partie évasée (18),
– la susdite face plane (27) de la forme extérieure des joues s'étend au droit de la susdite partie évasée (18),
– la susdite forme an saillie consiste en une forme bombée (32) tangente à un plan radial axialement décalé vers l'extérieur par rapport audit plan ($P_0$, $P'_0$) et s'étend en outre au droit de la susdite partie conique (19).

2. Robinet selon la revendication 1, caractérisé en ce que le volume v' de la forme bombée (32), délimité par le susdit plan ($P_0$, $P'_0$), est sensiblement égal au volume libre v compris entre la paroi latérale extérieure (23) de la gorge (20) et la bordure extérieure (25) de la joue.

3. Robinet selon l'une des revendications précédentes, pouvant se monter entre différents types de brides réalisées selon des normes différentes, caractérisé en ce que le diamètre au niveau de la jonction entre la partie rentrante (19) et la partie évasée (18) des évidements circulaires, est prévu supérieur au diamètre intérieur maximum desdits types de brides.

4. Robinet selon l'une des revendications précédentes, pouvant se monter entre différents types de brides réalisées selon des normes différentes, caractérisé en ce que le diamètre de la paroi latérale (23) de la gorge annulaire (20) est prévu inférieur au diamètre extérieur minimum des parties des faces radiales des brides venant comprimer lesdites joues (11, 12), de manière à s'assurer que ces parties viennent toujours en butée sur le flanc radial (3) du corps (1) du robinet.

5. Robinet selon la revendication 1, caractérisé en ce que la pente de la susdite partie rentrante de l'évidement (13, 14), par rapport à un plan orthogonal à l'axe de l'alésage (2), est comprise entre 10° et 40°.

6. Robinet à papillon selon l'une des revendications précédentes, pouvant se monter entre différents types de brides réalisées selon des normes différentes et présentant, à leur périphérie, une pluralité de perçages au travers desquels peuvent être montés des tirants axiaux ou des vis, ces différentes brides présentant entre elles au moins deux perçages en correspondance, de telle sorte que, dans un plan radial du robinet, les aires de passage des tirants montés dans ces deux perçages des différents types de brides peuvent être groupées dans au moins deux zones respectives distinctes (38, 39) à la périphérie du corps (1) du robinet, caractérisé en ce que ledit corps présente à sa périphérie, au moins deux bossages (40, 41) s'étendant chacun dans l'une desdites zones sans recouper les aires de passage des tirants montés dans les autres perçages desdites brides.

7. Robinet à papillon selon la revendication 6, caractérisé en ce que le nombre des bossages correspond au nombre des tirants juste nécessaire pour contenir l'effort supporté par le robinet lors d'une opération de démontage de la tuyauterie aval à la pression maximum de service.

8. Procédé de fabrication d'un robinet à papillon conforme à l'une des revendications précédentes, caractérisé en ce que la réalisation du corps de ce robinet comprend les étapes suivantes:
– pour chacune des gammes de robinets, qui se trouve définie par le diamètre nominal de ce robinet, la détermination des zones de groupement des projections dans un plan radial des perçages des différentes brides utilisables pour ce robinet, surperposées coaxialement,
– la détermination par calcul de résistance, du nombre nécessaire et suffisant de bossages permettant de réaliser le démontage aval de la tuyauterie à la pression maximum de service,
– en fonction de ce nombre, la détermination de la forme et de l'emplacement des bossages à prévoir à la périphérie du corps,
– la réalisation, par exemple par moulage, du corps (1) du robinet muni des bossages précédemment déterminés, et
– le perçage, dans ces bossages, de trous de passage des tirants ou des vis à des emplacements et à des dimensions déterminés en fonction des brides que l'on désire utiliser.

## Patentansprüche

1. Klappenventil der Art mit:
– einem Körper, der eine zentrale Bohrung (2) aufweist, sowie einem senkrecht zur Achse der besagten Bohrung (2) angebrachten Querloch, zwei parallele radiale Flanken (3), in deren Zentrum besagte Bohrung (2) einmündet und die jeweils eine kreisförmige koaxiale Aussparung (13, 14) aufweisen, welche sich radial von besagter Bohrung (2) ausgehend erstreckt, eine ringförmige Rinne (20) mit rechteckigem Boden, welche axial im Körper (1) verläuft und deren eine Seitenwand (23) in Höhe der besagten radialen Flanke (3) endet;
– einer Verschlussvorrichtung (6), die drehbar im besagten Körper angebracht ist, mittels mindestens einer Antriebswelle (7), welche durch besagtes Loch (4) reicht, und
– einem Stutzen aus Elastomer (8), mit im wesentlichen U-förmigem Querschnitt, dessen Kern (9) die Bohrung (2) im Körper (1) bedeckt und dessen Seitenteile (11, 12) teilweise in besagte kreisförmige Aussparungen (13, 14) reichen und dessen innere Form im wesentlichen komplementär zu der der entsprechenden kreisförmigen Aussparungen (13, 14) ist, jedoch mit einem geringeren äusseren Durchmesser als dem der besagten Seitenwand (23) der ringförmigen Rinne (20), so dass zwischen besagtem Seitenteil (11, 12) und besagter Seitenwand (23) ein ringförmiges, in Ruhestellung freies, Volumen v (26) vorgesehen ist, und einer äusseren Form, die mindestens eine ebene Fläche (27) aufweist, welche im wesentlichen in der Ebene der entsprechenden radialen Flanke (3) angeordnet ist und, gegenüber der besagten Rinne, einer nach aussen im Verhältnis zur Ebene ($P_0$, $P'_0$) der besagten radialen Flanke (3) vorspringenden Form, wobei, zur Montage dieses Ventils auf Rohrleitungen, mindestens ein Flansch verwendet wird, mit einem Bund, der eine radiale Fläche aufweist, zur Anlage an eine der besagten radialen Flanken (3) und auf seinem Umfang eine Reihe von Axiallöchern, durch welche Zugstäbe geführt werden können, dadurch gekennzeichnet, dass:
– die ringförmige Rinne (20) von der zentralen Bohrung (2) durch einen einspringenden, im wesentlichen kegelförmigen Abschnitt (19) getrennt ist und durch einen konisch erweiterten Abschnitt (18),
– besagte ebene Fläche (27) der äusseren Form der Wangen sich gegenüber dem besagten konisch erweiterten Abschnitt (18) erstreckt,
– besagte vorspringende Form aus einer gewölbten, mit einer radialen Ebene tangierenden Form (32) besteht, die axial im Verhältnis zur besagten Ebene ($P_0$, $P'_0$) nach aussen verschoben ist und sich ausserdem gegenüber dem besagten kegelförmigen Abschnitt (19) erstreckt.

2. Ventil nach Anspruch 1, dadurch gekennzeichnet, dass das Volumen v' der von besagter Ebene ($P_0$, $P'_0$) begrenzten gewölbten Form (32) im wesentlichen dem freien Volumen v entspricht, welches zwischen der äusseren Seitenwand (23) der Rinne (20) und dem äusseren Rand (25) der Wange besteht.

3. Ventil nach einem der vorhergehenden Ansprüche, das zwischen Flansche verschiedener Art und nach verschiedenen Normen hergestellt montiert werden kann, dadurch gekennzeichnet, dass der Durchmesser an der Verbindungsstelle zwischen dem einspringenden Abschnitt (19) und dem konisch ausgeweiteten Abschnitt (18) der kreisförmigen Aussparungen grösser ist als der maximale innere Durchmesser der besagten verschiedenen Flanscharten.

4. Ventil nach einem der vorhergehenden Ansprüche, das zwischen Flansche verschiedener Art und nach verschiedenen Normen hergestellt montiert werden kann, dadurch gekennzeichnet, dass der Durchmesser der Seitenwand (23) der kreisförmigen Rinne (20) kleiner ist als der äussere Mindestdurchmesser der Radialflächen der Flansche, welche besagte Wangen (11, 12) zusammenpressen, um sicherzustellen, dass besagte Abschnitte immer gegen die radiale Flanke (3) des Ventilkörpers (1) anliegen.

5. Ventil nach Anspruch 1, dadurch gekennzeichnet, dass das Gefälle des besagten einspringenden Abschnittes der Aussparung (13, 14) im Verhältnis zu einer zur Bohrungsachse (2) senkrechten Ebene zwischen 10° und 40° beträgt.

6. Klappenventil nach einem der vorhergehenden Ansprüche, das zwischen Flansche verschiedener Arten und verschiedenen Normen entsprechend eingebaut werden kann, welche auf ihrem Umfang eine Vielzahl von Löchern aufweisen, durch die axiale Zugstäbe oder Schrauben geführt und montiert werden können, wobei diese Flansche im Verhältnis zueinander wenigstens zwei einander deckende Löcher aufweisen, so dass in einer Radialebene des Ventils die Durchgangszonen der Zugstäbe, die in diesen beiden Löchern der Flansche verschiedener Art montiert sind, in mindestens zwei, jeweils abgesonderten Abschnitten (38, 39) auf dem Umfang des Ventilkörpers (1) gruppiert werden können, dadurch gekennzeichnet, dass besagter Körper auf seinem Umfang mindestens zwei Vorsprünge (40, 41) aufweist, die sich jeweils über einen der besagten Abschnitte erstrecken, ohne die Durchgangszonen der in die anderen Löcher der besagten Flansche montierten Zugstäbe zu schneiden.

7. Klappenventil nach Anpruch 6, dadurch gekennzeichnet, dass die Zahl der Vorsprünge der Anzahl der Zugstäbe entspricht, die genau nötig ist, um die vom Ventil auszuhaltende Belastung aufzunehmen, die bei einer Demontage der nachfolgenden Rohrleitungen bei Höchstbetriebsdruck auftritt.

8. Verfahren zur Herstellung eines Klappenventils gemäss einem der vorhergehenden Ansprüche, dadurch gekennzeichnet, dass die Herstellung des Körpers dieses Ventils folgende Etappen einschliesst:
— Für jede der Ventilbaureihen, die durch den Nominaldurchmesser dieses Ventils definiert werden, die Bestimmung der Gruppierungsbereiche der Projektionen in einer radialen Ebene der Löcher der verschiedenen koaxial übereinanderliegenden für dieses Ventil benutzten Flansche.
— Die Bestimmung, durch Widerstandsberechnung, der nötigen und ausreichenden Anzahl von Vorsprüngen, die es erlauben, die Rohrleitungen bei Höchstbetriebsdruck unterhalb des Ventils abzubauen.
— Entsprechend der Anzahl, die Bestimmung der Form und der Lage der auf dem Körperumfang vorzusehenden Vorsprünge.
— Die Herstellung, zum Beispiel durch Guss, des Körpers (1) des Ventils mit den vorherbestimmten Vorsprüngen, und
— die Bohrung in diesen Vorsprüngen von Durchgangslöchern für die Zugstäbe oder Schrauben, an Stellen und mit Ausmassen, die je nach den zu benutzenden Flanschen bestimmt werden.

**Claims**

1. Butterfly valve of the type involving:
— a body (1) with a central bore (2), a transversal drilling (4) at a right angle to the axis of said bore (2), two parallel radial faces (3) in the center of which the said bore (2) opens, each of which features a coaxial circular recess (13, 14) extending radially outward from the said bore (2), an annular groove (20) having a rectangular bottom and extending axially in the body (1), one lateral wall (23) ending at the level of said radial face (3);
— a closing device (6) assembled so as to rotate inside the said body by means of at least an operating shaft (7), inserted in the said drilling (4) and
— an elastomer sleeve (8) with a basically U-shaped cross-section, the core (9) of which lines the bore (2) of the body (1) and the lateral cheeks (11, 12) of which partially fit into the said circular recesses (13, 14) and which has an inner shape substantially matching the shape of the respective circular recesses (13, 14) with, however, an outer diameter smaller than that of said side wall (23) of the annular groove (20), so that, between said cheek (11, 12) and said side wall (23), there remains an annular volume v (26), empty at rest, and an outer shape comprising at least a flat face (27) substantially lying in the plane of the matching radial face (3) and, opposite said groove (20), a shape protruding outwards with respect to the plane ($P_0$, $P'_0$) of said radial face (3), this valve using, for its assembly on a pipe, at least one flange comprising a collar with a radial face designed to be applied against one of said radial faces (3) and comprising, on its perimeter, a series of axial holes, through which pins can be mounted, characterized in that:
— the annular groove (20) is separated from the central bore (2) by a receding section (19) substantially conical in shape and by a flared section (18);
— said flat face (27) of the outer shape of the cheeks extends opposite said flared section (18),
— said protruding shape consists of a bulge (32) tangent to a radial plane axially offset outwards with respect to said plane ($P_0$, $P'_0$) and further extending opposite said conical section (19).

2. Valve according to claim 1, characterized in that the volume v' of the bulge (32) limited by the above mentioned plane ($P_0$, $P'_0$) is substantially equal to the free volume v comprised between the outer side wall (23) of the groove (20) and the outer edge (25) of the cheek.

3. Valve according to one of the preceding claims, adapted to be mounted between different types of flanges manufactured to different standards, characterized in that the diameter at the junction between the receding section (19) and the flared section (18) of the circular recesses is designed greater than the maximum inner diameter of said different types of flanges.

4. Valve according to one of the preceding claims, adapted to be mounted between different types of flanges manufactured to different standards, characterized in that the diameter of the side wall (23) of the annular groove (20) is designed smaller than the minimum outer diameter of the parts of the radial faces of the flanges that compress the said cheeks (11, 12) so as to make sure that these parts always abut against the radial face (3) of the body (1) of the valve.

5. Valve according to claim 1, characterized in that the slope of the aforementioned receding section of the recess (13, 14) with respect to a plane orthogonal to the axis of the bore (2) is comprised between 10° and 40°.

6. Butterfly according to one of the preceding claims, which can be assembled between different types of flanges manufactured to different standards and featuring, around their perimeter, various holes through which axial pins or screws can be assembled, these different flanges having at least two matching holes, such that, in a radial plane of the valve, the passage areas of the pins assembled through said two holes of the different types of flanges may be clustered in at least two respective distinct areas (38, 39) at the perimeter of the body (1) of the valve, characterized in that at least two bosses (40, 41) are arranged on the perimeter of the said body, each boss spreading over one of the said cluster areas, but not overlapping the passage areas of the pins assembled in the other holes of the same flanges.

7. Butterfly valve according to claim 6, characterized in that number of bosses matches the minimum required number of pins to contain the stress withstood by the valve in the case of the removal of the downstream piping at maximum operating pressure.

8. Manufacturing method for a butterfly valve complying with one of the preceding claims, characterized in that the body of this valve is manufactured in the following phases:
   – for each range of valves, as defined by the valve nominal diameter, an assessment of the areas covered by the clusters of the projections on a radial plane of the holes of the different flanges liable to be used for the same valve, superimposed coaxially,
   – obtaining by strength calculations, a definition of the minimum required number of bosses to allow the removal of the downstream piping at maximum operating pressure,
   – on the basis of this number, a definition of the shape and location of the bosses to be provided around the body,
   – the manufacture, for instance by casting, of the body (1) of the valve complete with the bosses defined hereinabove, and
   – the drilling of holes, in these bosses, to house the pins or screws at the proper locations and with the sizes required to match the flanges to be used.

FIG.1

FIG.3

FIG. 2

# FIG. 4

FIG.5

FIG.6

FIG.9

AVAL

AMONT

0182676

FIG.7

FIG.8

19